# EUROPEAN PATENT APPLICATION

(11) **EP 4 715 902 A1**
(43) Date of publication of application: **25.03.2026**
(21) Application number: 24201889.3
(22) Date of filing: 23.09.2024
(51) Int. Cl.: H01M 4/48, H01M 4/525, H01M 4/58, H01M 4/62, H01M 10/0525, C08F 8/32, C08F 22/40, C08F 222/40, C08K 5/3415, H01M 4/02

(54) **IONICALLY CONDUCTIVE POLYMERIC BINDER FOR CATHODE**

(71) Applicant: Belenos Clean Power Holding AG, 2502 Biel/Bienne (CH)
(72) Inventor: MARTINEZ-IBANEZ, Maria, 01010 Vitoria-Gasteiz (ES); ARMAND, Michel, 75014 Paris (FR); SANTIAGO SANCHEZ, Alexander, 01200 Salvatierra/Agurain (ES); FRAILE INSAGURBE, David, 01010 Vitoria-Gasteiz (ES); SANCHEZ DIEZ, Eduardo, 48940 Leioa (ES); ALDALUR CEBERIO, Itziar, 20001 Donostia (ES); ZUGAZUA GANADO, Oihane, 01010 Vitoria-Gasteiz (ES); PORCARELLI, Luca, 4052 Basel (CH); PEREGO, Daniele, 5400 Baden (CH)
(74) Representative: ICB SA

(57) **Abstract**

The present invention relates to an ionically conductive polymeric binder for a cathode comprising m repeat units according to formula (I) and n repeat units according to formula (II) 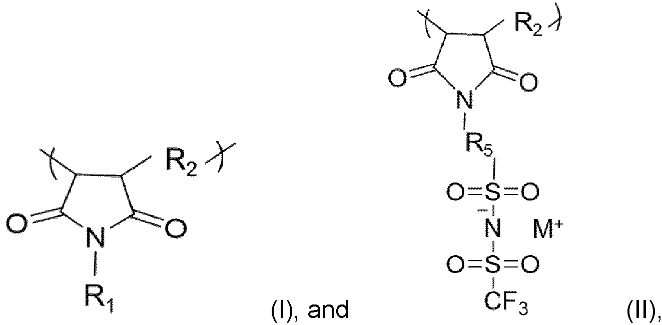 wherein R₁ is (CH₂)ₓ-R₃, wherein x is between 1 and 20 and R₃ is H or CN; R₂ and Rs, individually, are C₁-C₁₀ alkyl or C₂-C₁₀ alkenyl; M is an alkali metal or an alkaline earth metal; the ratio of m to n (m/n) is between 25:1 and 1:25; and m + n is q, wherein q is between 50 and 5000. The present invention further relates to a cathode comprising the ionically conductive polymeric binder, and to methods of producing the ionically conductive polymeric binder.

## Description

### Technical field of the invention

The present invention relates to ionically conductive polymeric binders for cathodes for a battery. The invention further relates to cathodes comprising ionically conductive polymeric binders, and to methods of producing the ionically conductive polymeric binders.

### Background

In the pursuit of high energy density batteries, both gravimetrically and volumetrically, the development of the cathode, and in particular the binder, has gained significant attention. Conventional binders used in cathodes, such as polyvinylidene fluoride (PVDF), polyethylene oxide (PEO), and polyacrylic acid (PAA), provide the mechanical integrity required for high loading and repeated charging/discharging cycles. However, their ability to achieve a good ionic conduction heavily depends on electrolyte wettability or the doping of the binder polymer with metallic salts or ionic liquids, a challenge that is more demanding in thicker cathodes.

For these reasons, the development of ionically conductive polymeric binders becomes important. However, many known ionically conductive binders exhibit high crystallinity, which adversely affects their properties, particularly their mechanical properties, compromising the cathode's mechanical integrity. To address this issue and to achieve mechanically stable high loading cathodes, polymer blends are employed, such as the incorporation of PVDF.

Polysalts are an emerging class of materials that are gaining attention as ionically conductive polymeric binders for cathodes in batteries, particularly in lithium-ion batteries. These materials are polymers with ionic groups, which render them an inherently ionically conductive. Their inherent ionic conductivity can improve the ionic conductivity within the cathode, as compared to prior art metal salt doped polymeric binders, leading to better charge and discharge rates. In addition, they seem to be electrochemically stable over a wide voltage range, which prevents the decomposition of the binder over time, especially in high-voltage cathodes. Polysalts have also proven to be compatible with high-energy cathode materials such as lithium nickel manganese cobalt oxide (NMC) and lithium nickel cobalt aluminium oxide (NCA), contributing to achieving high energy densities without compromising the cycle life.

WO2008/097723 discloses non-elastic binder-comprising electrodes for Li-ion batteries. The binder can be a lithium polysalts of carboxylic and sulfonic acids, including lithium poly(meth)acrylates, lithium polystyrenesulfonates, and lithium polysulfonate fluoropolymers. These binders allow to provide reduced irreversible capacity and fade. Lithium polysalt binder comprising electrodes can significantly decrease the irreversible first cycle capacity loss in the electrode.

### Summary of the invention

It is an aim of the present invention to overcome one or more of the foregoing drawbacks. It is an aim of the present invention to provide ionically conductive polymeric binders for electrodes for batteries, in particular for cathodes, which have excellent mechanical properties and an excellent ionic conductivity, rendering the binders very suitable for use at high loading with a good rate capability. Another aim is to provide ionically conductive polymeric binders which have a high thermal stability and resistance and/or an excellent resistance against high voltages (i.e. having a high oxidation stability).

Yet another aim is to provide an ionically conductive polymeric binder which is highly compatible with commercially available active materials, offering excellent adhesion thereto and to any electrically conductive compounds used in the electrode. It is a further aim to provide ionically conductive polymeric binders which allow to produce self-standing and flexible electrodes.

A further aim is to provide an ionically conductive polymeric binder wherein the adhesive strength and the ionic conductivity can be varied in function of the application, such as the other components of the electrode and/or the composition and properties of the electrolyte.

Yet another aim is to provide ionically conductive binders comprising a significantly reduced amount of halogen atoms compared to prior art polymeric binders, rendering them more sustainable.

It is another aim of the invention to provide methods to manufacture such ionically conductive polymeric binders for electrodes by means of processes that limit the use of harmful solvents to a minimum, or even exclude the need for such solvents, and that thus have a lower environmental footprint.

It is a further aim to provide electrodes, in particular cathodes, having a performance that is at least similar to, and even better, than existing electrodes, in particular cathodes, comprising commercially known polymeric binders. This performance includes both mechanical properties - in particular adhesive strength, electrode-electrolyte interface resistance, ease of handling and ease of assembly in a battery cell - and the electrochemical performance of the battery cell comprising such an electrode.

A first aspect of the present invention discloses an ionically conductive polymeric binder for a cathode as set out in the appended claims.

The ionically conductive polymeric binder comprises m repeat units according to formula (I) 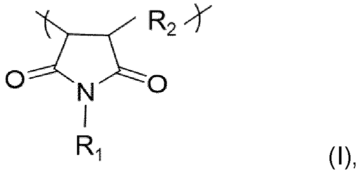 wherein R₁ is (CH₂)ₓ-R₃, wherein x is between 1 and 20, and R₃ is H or CN; and R₂ is C₁-C₁₀ alkyl or C₂-C₁₀ alkenyl.

The ionically conductive polymeric binder further comprises n repeat units according to formula (II) 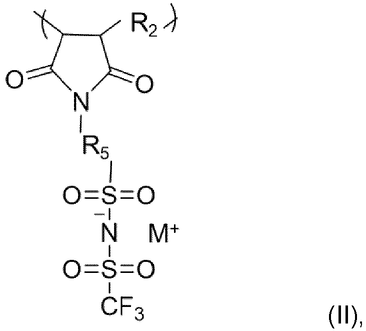 wherein R₂ and Rs, individually, are C₁-C₁₀ alkyl or C₂-C₁₀ alkenyl; M is an alkali metal or an alkaline earth metal.

In other words, the ionically conductive polymeric binder is a copolymer comprising m repeat units according to formula (I) and n repeat units according to formula (II).

The ratio of m to n, i.e. the ratio of the number of repeat units according to formula (I) to the number of repeat units according to formula (II), is between 25:1 to 1:25, preferably between 20:1 and 1:20, more preferably between 10:1 and 1:10, most preferably between 5:1 and 1:5, such as between 4:1 and 1:4, between 1:2 and 2:1, for example 1.4:1.

The total number of repeating units, m + n, or q, is between 50 and 5000, preferably between 75 and 4500, more preferably between 100 and 4000.

A first particularly preferred example of the ionically conductive polymeric binder is a binder wherein x is 6, R₃ is CN, R₂ is (CH₂)₂ and R₅ is (CH₂)₂. A second particularly preferred example of the ionically conductive polymeric binder is a binder wherein x is 10, R₃ is H and R₂ is (CH₂)₂ and R₅ is (CH₂)₂.

Advantageously, M is Li, Na or Mg, preferably Li.

A second aspect of the present invention discloses a cathode for a battery as set out in the appended claims. The cathode comprises an ionically conductive polymeric binder according to the first aspect.

Advantageously, the cathode comprises between 75 % and 95 % by weight, preferably between 80 % and 95 % by weight, more preferably between 85 % and 92 % by weight, for example 90 % by weight of an active material, based on the total weight of the cathode.

Advantageously, the cathode comprises between 1 % and 15 % by weight, preferably between 2 % and 12 % by weight, more preferably between 5 % and 10 % by weight of an electrically conductive compound, based on the total weight of the cathode.

Advantageously, the cathode comprises between 1 % and 15 % by weight, preferably between 2 % and 12 % by weight, more preferably between 5 % and 10 % by weight of an ionically conductive polymeric binder according to the first aspect of the invention, based on the total weight of the cathode.

Advantageously, the cathode comprises between 75 % and 95 % by weight of the active material, between 1 % and 15 % by weight of the electrically conductive compound and 1 % and 15 % by weight of the ionically conductive polymeric binder according to the first aspect of the invention, based on the total weight of the cathode.

Advantageously, the sum of the % by weight of the active material, the electrically conductive compound and the inventive ionically conductive polymeric binder in the cathode is 100 %, i.e., the cathode advantageously consists of the active material, the electrically conductive compound and the inventive ionically conductive polymeric binder. The skilled person will understand that when the sum of the three components is to be 100 %, the cathode will comprise more than 1 % by weight of the of the electrically conductive compound and more than 1 % by weight of the inventive binder in order to arrive at 100 %, for example 75 % by weight of active material and 12.5 % by weight of each of the electrically conductive compound and the inventive binder, or 90 % by weight of active material, 3 % by weight of the electrically conductive compound and 7 % by weight of the inventive binder.

Advantageously, the cathode has a porosity of at least 20 %, preferably at least 25 %, more preferably at least 30 %, such as at least 40 %, wherein the porosity is expressed as the ratio of the density of the cathode to the theoretical density of the cathode, wherein the theoretical density of the cathode is calculated from the composition of the cathode and the density of each individual compound in the cathode.

Advantageously, the active material comprises or substantially consists of one or more of Lithium Nickel Cobalt Manganese Oxide (NMC), LiFePO₄ and V₂O₅. Preferred examples of NMC include LiNi_{0.8}Mn_{0.1}Co_{0.1}O₂ (NMC811) and LiNi_{0.6}Mn_{0.2}Co_{0.2}O₂ (NMC622).

Advantageously, the electronically conductive compound comprises carbon. Carbon can be present in forms known in the art, such as carbon nanotubes or carbon black.

A non-limiting example of a cathode of the invention is a cathode comprising between 85 % and 95 % by weight of NMC, between 2 % and 10% of a carbon black-comprising electrically conductive compound and between 2 % and 10 % by weight of an ionically conductive polymeric binder of the first aspect, based on the total weight of the cathode.

Advantageously, the cathode consists of NMC, a carbon black-comprising electrically conductive compound and an inventive ionically conductive polymeric binder, i.e., the cathode does not comprise further components (additives) and the sum of the % by weight of these three components is advantageously 100 %. A particularly preferred example of such a cathode is a cathode consisting of 90 % by weight of NMC, 5 % by weight of a carbon black-comprising electrically conductive compound and 5 % by weight of an inventive ionically conductive polymeric binder.

A further non-limiting example of a cathode of the invention is a cathode comprising between 75 % and 85 % by weight of LiFePO₄ (LFP), between 5 % and 15 % of a carbon black-comprising electrically conductive compound and between 5 % and 15 % by weight of an ionically conductive polymeric binder of the first aspect, based on the total weight of the cathode.

Advantageously, the cathode consists of LFP, a carbon black-comprising electrically conductive compound and an inventive ionically conductive polymeric binder, i.e., the cathode does not comprise further components (additives) and the sum of the % by weight of these three components is advantageously 100 %. A particularly preferred example of such a cathode is a cathode consisting of 80 % by weight of LFP, 10 % by weight of a carbon black-comprising electrically conductive compound and 10 % by weight of an inventive ionically conductive polymeric binder.

A third aspect of the present invention discloses a method for producing an ionically conductive polymeric binder as set out in the appended claims. The ionically conductive polymeric binder is according to the first aspect of the present invention.

The method comprises reacting an amino-derivative according to H₂N-R₁, wherein R₁ is as hereinabove described, with a polymer comprising q repeat units according to formula (III) 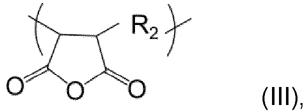 wherein R₂ is as hereinabove described and q is between 50 and 5000, preferably between 75 and 4500, more preferably between 100 and 4000.

The reaction takes place in the presence of dimethylformamide (DMF).

The reaction takes place at a temperature T₁ between 15 °C and 50 °C, more preferably between 15 °C and 30 °C, such as room temperature.

The reaction leads to the formation of a first intermediate polymer. Advantageously, the first intermediate polymer comprises n repeat units according to formula (III) and m repeat units according to formula (IV) 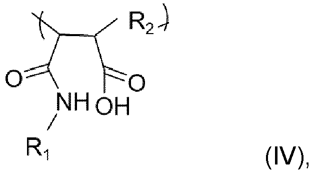 wherein m + n equals q.

The first intermediate polymer is then reacted with F₃CO₂SN⁻O₂S-R₄-NH₂ M⁺, wherein R₄ and M are as hereinabove described.

The reaction takes place in the presence of DMF.

The reaction takes place at a temperature T₂ between 15 °C and 50 °C, more preferably between 15 °C and 30 °C, such as room temperature.

The reaction leads to the formation of a second intermediate polymer. Advantageously, the intermediate polymer does not comprise a closed ring in its molecular structure, in particular no imide ring. Advantageously, the second intermediate polymer comprises m repeat units according to formula (IV) and n repeat units according to formula (V) 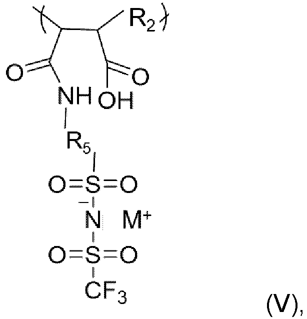 wherein m + n equals q.

The second intermediate polymer is then subjected to imide ring closing, thereby forming the ionically conductive polymeric binder. The step of imide ring closing can be performed by heating the second intermediate polymer to a temperature T₃ higher than T₂, followed by increasing (i.e. further heating) the temperature from T₃ to a temperature T₄. Alternatively, the imide ring closing step can be performed at T₂ in the presence of a catalyst. In other words, using a catalyst for the imide ring closing can be performed without the requirement of heating the second intermediate polymer.

Advantageously, temperature T₃ is between 30 °C and 80 °C, preferably between 35 °C and 70 °C, more preferably between 40 °C and 60 °C, for example 50 °C.

Advantageously, temperature T₄ is between 100 °C and 250 °C, preferably between 125 °C and 200 °C, more preferably between 150 °C and 180 °C.

Advantageously, when the imide ring is closed by heating the second intermediate polymer, it is performed in the presence of DMF.

Advantageously, when the imide ring is closed in the presence of a catalyst, the catalyst comprises or substantially consists of carbonyldiimidazole.

The present disclosure is further related to the use of an ionically conductive polymeric binder according to the first aspect in a slurry for producing a cathode according to the second aspect.

### Description of the figures

Aspects of the invention will now be described in more detail with reference to the appended drawings, wherein same reference numerals illustrate same features and wherein:
- Figure 1 shows the H nuclear magnetic resonance (H-NMR) spectrum of a first ionically conductive polymeric binder of the invention;
- Figure 2 shows the Fourier Transform Infrared Spectroscopy (FTIR) spectrum of the first polymeric binder;
- Figure 3 shows the thermogravimetric analysis (TGA) of the first binder;
- Figure 4 shows the differential scanning calorimetry (DSC) analysis of the first binder;
- Figure 5 shows the linear sweep voltammetry (LSV) analysis of the first binder;
- Figure 6 shows the H-NMR spectrum of a second ionically conductive polymeric binder of the invention;
- Figure 7 shows the FTIR spectrum of the second binder;
- Figure 8 shows the TGA analysis of the second binder;
- Figure 9 shows the DSC analysis of the second binder;
- Figure 10 shows the LSV analysis of the second binder;
- Figure 11 shows the ionic conductivity of the first and the second binder in function of the concentration of the polymer;
- Figure 12 shows the ionic conductivity of the first and the second binder in function of the concentration of the lithium ions;
- Figure 13 shows the porosity of two inventive cathodes and a reference cathode;
- Figure 14 shows the discharge capacity and the coulombic efficiency of a first battery cell comprising a cathode obtained with the first binder;
- Figure 15 shows the voltage in function of the specific capacity for the first battery cell;
- Figure 16 shows the discharge capacity and the coulombic efficiency of a second battery cell comprising a cathode obtained with the second binder;
- Figure 17 shows the voltage in function of the specific capacity for the second battery cell.

### Detailed description of the invention

The ionically conductive polymeric binder is a copolymer and comprises m repeat units according to (I) and n repeat units according to formula (II): 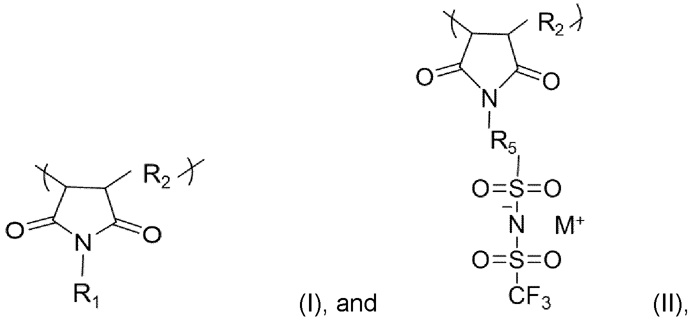 wherein
R₁ is (CH₂)ₓ-R₃, wherein x is between 1 and 20, preferably between 2 and 15, more preferably between 4 and 10, and wherein R₃ is H or CN;
R₂ and Rs, individually, are C₁-C₁₀ alkyl or C₂-C₁₀ alkenyl; and
M is an alkali metal or an alkaline earth metal.

Advantageously, q is between 50 and 5000, preferably between 75 and 4500, more preferably between 100 and 4000.

Advantageously, m is between 5 and 4500, preferably between 10 and 3600. Advantageously, n is between 5 and 4500, preferably between 10 and 3600.

Advantageously, the molecular weight of the ionically conductive polymer of the present invention is between 10 and 3000 kDa, preferably between 11 and 2500 kDa, more preferably between 12 and 2000 kDa, most preferably between 13 and 1800 kDa.

It will be understood that the values for m and n, i.e. the number of repeat units according to formula (I) and formula (II), depend on the total number of repeat units, q, and the ratio of m to n, i.e. the ratio of the number of repeat units according to formula (I) to the number of repeat units according to formula (II). For example, when q is 3000 and m:n is 2:1, then the copolymer comprises 2000 repeat units according to formula (I) and 1000 repeat units according to formula (II). When q is 5000 and m:n is 1:1, then the copolymer comprises 2500 repeat units according to formula (I) and 2500 repeat units according to formula (II).

The repeat units according to formula (II) define the ionic conductivity of the polymeric binder, whereas the repeat units according for formula (I) are responsible for the binding properties, i.e. the adhesive strength. It will be understood that by changing the ratio of m to n, for a constant total number of repeat units, q, the ionic conductivity and the adhesive strength of the ionically conductive polymeric binder can be varied. This offers a very versatile polymeric binder, allowing to fine-tune its properties in function of the other components in the cathode, as well as on the electrolyte intended to be used in the battery cell.

R₁ can be linear or branched, i.e. the (CH₂)ₓ-chain can be linear or branched. Advantageously, R₁, i.e. the (CH₂)ₓ-chain, is linear.

R₂ can be linear or branched. Advantageously, R₂ is a C₁-C₁₀ alkyl according to (CH₂)_{y} wherein y is between 1 and 10, preferably between 1 and 4, more preferably 1 or 2, i.e. CH₂ or (CH₂)₂.

R₅ can be linear or branched. Advantageously, R₂ is a C₁-C₁₀ alkyl according to (CH₂)_{w} wherein w is between 1 and 10, preferably between 1 and 4, more preferably 1 or 2, i.e. CH₂ or (CH₂)₂.

Advantageously, the copolymer is a random copolymer, i.e. a copolymer wherein the repeat units according to formulas (I) and (II) are distributed randomly. Alternatively, yet advantageously, the copolymer is a block copolymer, i.e. a copolymer comprising one or more "blocks" of repeat units according to formula (I), and one or more "blocks" of repeat units according to formula (II). An example of such a copolymer is represented by the structure of formula (VI): 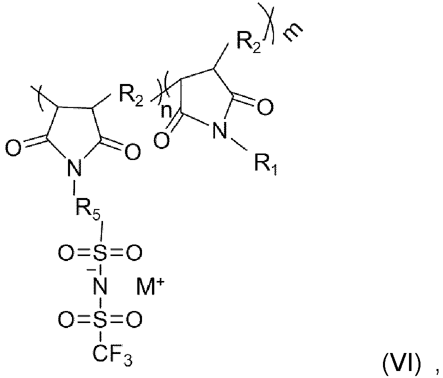 wherein the copolymer comprises one block of n repeat units according to formula (II) and one block of m repeat units according to formula (I).

An example of the ionically conductive polymeric binder is block copolymer wherein x is 6, R₃ is CN, R₂ is (CH₂)₂, and R₅ is (CH₂)₂, in particular wherein M is Li:

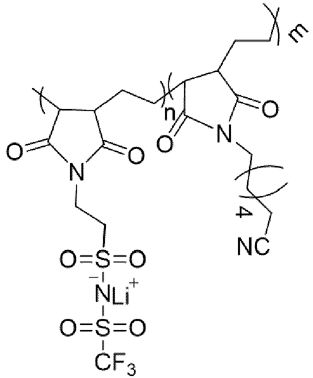

A second particularly preferred example of the ionically conductive polymeric binder is a binder wherein x is 10, R₃ is H, R₂ is (CH₂)₂, and R₅ is (CH₂)₂, in particular wherein M is Li:

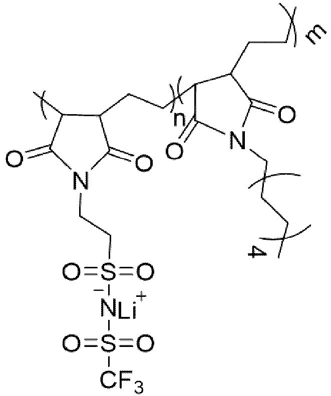

When x is 6, R₃ is CN and R₂ is (CH₂)₂, the first and the second intermediate polymer advantageously have a structure according to formulas (VII) and (VIII), respectively:

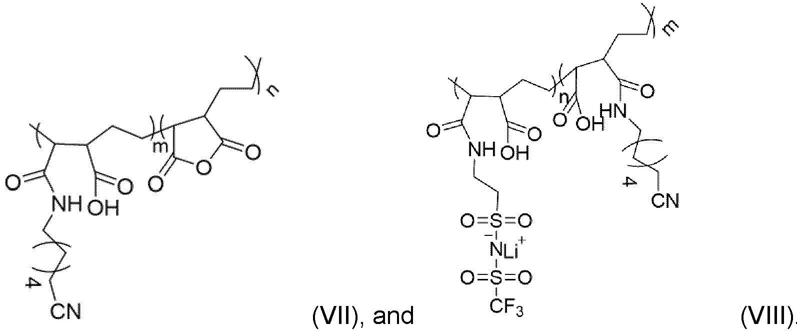

For example, when x is 10, R₃ is H and R₂ is (CH₂)₂, the first and the second intermediate polymer advantageously have a structure according to formulas (IX) and (X), respectively:

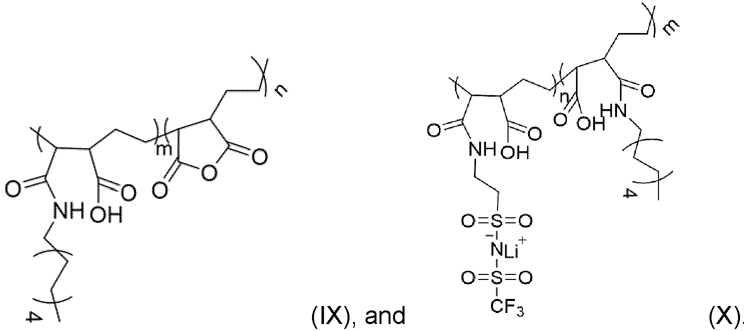

Advantageously, the inventive ionically conductive polymeric binders have a high thermal resistance, i.e. they can withstand temperatures of at least 250 °C, preferably at least 300 °C, more preferably at least 350 °C, as measured by thermogravimetric analysis (TGA) at 10 °C/min under an Ar flow of 60 mL/min. Advantageously, the thermal resistance of the ionically conductive polymeric binders does not change significantly with a varying ratio of m to n of the polymer.

Advantageously, the ionically conductive polymeric binders have a glass transition temperature which is defined by the number of repeating units of formula (I) and of formula (II), and more particularly by the ratio of repeating units, m to n. Advantageously, the glass transition temperature is between 30 °C and 175 °C, preferably between 50 °C and 150 °C, more preferably between 80 °C and 120 °C, for example between 90 °C and 110 °C, as measured by differential scanning calorimetry (DSC) at a heating/cooling rate of 10 °C/min from -80 °C to more than 200 °C for two cycles under an Ar atmosphere, wherein the results are taken in the second cycle to ensure that the thermal history of the polymer has been erased, thereby ensuring a reliable and reproducible value for the glass transition temperature. It will be understood that the exact glass transition temperature of the ionically conductive polymeric binder depends on the ratio m to n.

Advantageously, the ionically conductive polymeric binders have a high oxidation stability of at least 2.5 V, preferably at least 3 V, more preferably at least 4 V, such as at least 4.5 V, as measured by linear sweep voltammetry (LSV) analysis measured at 1 mV s⁻¹ in propylene carbonate solution at room temperature.

Cathodes according to the present invention comprise or consist of an ionically conductive polymeric binder of the invention, as well as an active compound and an electrically conductive material.

The active material can be any cathode active material known in the art. It will be understood that the cathode can comprise two or more active materials. Non-limiting examples of suitable active materials include Lithium Nickel Cobalt Manganese Oxide (NMC) such as LiNi_{0.8}Mn_{0.1}Co_{0.1}O₂ (NMC811) and LiNi_{0.6}Mn_{0.2}Co_{0.2}O₂ (NMC622), LiFePO₄, LiMnₓFe₁₋ₓPO4 (LMFP), LiMn_{1.5}Ni_{0.5}O (LMNO) and V₂O₅.

The electrically conductive compound can be any electrically conductive compound known in the art. It will be understood that the cathode can comprise two or more electrically conductive compounds. Advantageously, the electrically conductive compound comprises or substantially consists of carbon. Non-limiting examples of suitable electrically conductive materials include carbon-comprising compounds, such as carbon black (for example C-65), carbon nanotubes (CNT), graphene and vapour grown carbon fibres (VGCF).

Advantageously, the cathode comprises a cathode current collector. The cathode current collector can be any current collector for a cathode known in the art, such as an aluminium foil, optionally comprising a carbon-comprising coating layer. When the cathode comprises a cathode current collector, the cathode advantageously comprises a layer comprising an active material, an electrically conductive compound and a binder as hereinabove described, the layer being into contact with, and advantageously adhered or attached to the cathode current collector.

A non-limiting example of a cathode of the invention is a cathode comprising a cathode current collector and a layer comprising between 85 % and 95 % by weight of NMC, between 2 % and 10 % of a carbon black-comprising electrically conductive compound and between 2 % and 10 % by weight of an inventive ionically conductive polymeric binder, based on the total weight of the layer. Advantageously, the layer consists of NMC, a carbon black-comprising electrically conductive compound and an inventive ionically conductive binder, i.e., the sum of their % by weight in the layer amounts to 100 %.

A further non-limiting example of a cathode of the invention is a cathode comprising a cathode current collector and a layer comprising between 75 % and 85 % by weight of LiFePO₄, between 5 % and 15 % of a carbon black-comprising electrically conductive compound and between 5 % and 15 % by weight of an inventive ionically conductive polymeric binder, based on the total weight of the layer. Advantageously, the layer consists of LiFePO₄, a carbon black-comprising electrically conductive compound and an inventive ionically conductive binder, i.e., the sum of their % by weight in the layer amounts to 100 %.

Cathodes according to the present invention can be made by methods known in the art. A preferred method comprises preparing a slurry comprising an ionically conductive polymeric binder of the invention, an active material and an electrically conductive compound as described hereinabove in a solvent, and tape casting the slurry on a cathode current collector.

Advantageously, the slurry comprises a solid content between 25 % and 75 % by weight, preferably between 30 % and 70 % by weight, more preferably between 35 % and 65 % by weight, most preferably between 40 % and 60 % by weight, such as between 45 % and 55 % by weight, based on the total weight of the slurry.

Advantageously, the solid content of the slurry comprises between 75 % and 95 % by weight of an active material, between 1 % and 10 % by weight of an electrically conductive compound and between 1 % and 10 % by weight of the ionically conductive polymeric binder.

Advantageously, the solvent is selected from the group consisting of water, N-Methyl-2-Pyrrolidone (NMP), acetonitrile, methyl-tetrahydrofuran, cyclohexanone, DMF and propylene carbonate.

Advantageously, the cathodes have an adhesion strength to the cathode current collector of at least 50 N/m, preferably at least 55 N/m, more preferably at least 60 N/m, such as at least 75 N/m or at least 80 N/m, as measured according to test standard ISO-8510-1.

### Examples

### Example 1

HO-(CH₂)₆-NH₂ was reacted with di-tert-butyl dicarbonate at room temperature for 15 hours in the presence of tetrahydrofuran. After removing the solvent, the reaction product was placed in diethyl ether and was washed with acetic acid and sodium bicarbonate aqueous solution. The solvent was removed under vacuum. The obtained reaction product was then reacted with methanesulfonyl chloride / triethylamine at room temperature for three hours in the presence of dichloromethane (DCM). The mixture was washed with aqueous sodium bicarbonate. The dichloromethane was removed and the resulting product was reacted with KCN at 80 °C for 18 hours in the presence of DMF as solvent. The reaction product was then placed in an aqueous ethyl acetate mixture and was washed with water and brine. Organics were collected and solvent removed under vacuum. The obtained reaction product was then reacted with HCl in 1,4-dioxane at a temperature between 0 °C and room temperature for 5 hours. The reaction was quenched with sodium bicarbonate, the product was extracted in dichloromethane and treated with sodium hydroxide to obtain the product H₂N-(CH₂)₆-CN ("the amino-derivative").

The amino-derivative was then reacted with a polymer comprising q repeating units 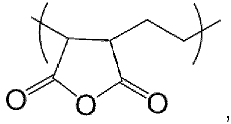 wherein q was between 100 and 4000, for 2 hours at room temperature in the presence of DMF. The obtained intermediate polymer was then reacted with F₃CO₂SN⁻O₂S(CH₂)₂NH₂ Li⁺ for 2 hours at room temperature in the presence of DMF. The obtained reaction product was then first heated to 50 °C for 4 hours in the presence of DMF, and then further heated to 170 °C for 16 hours in the presence of DMF.

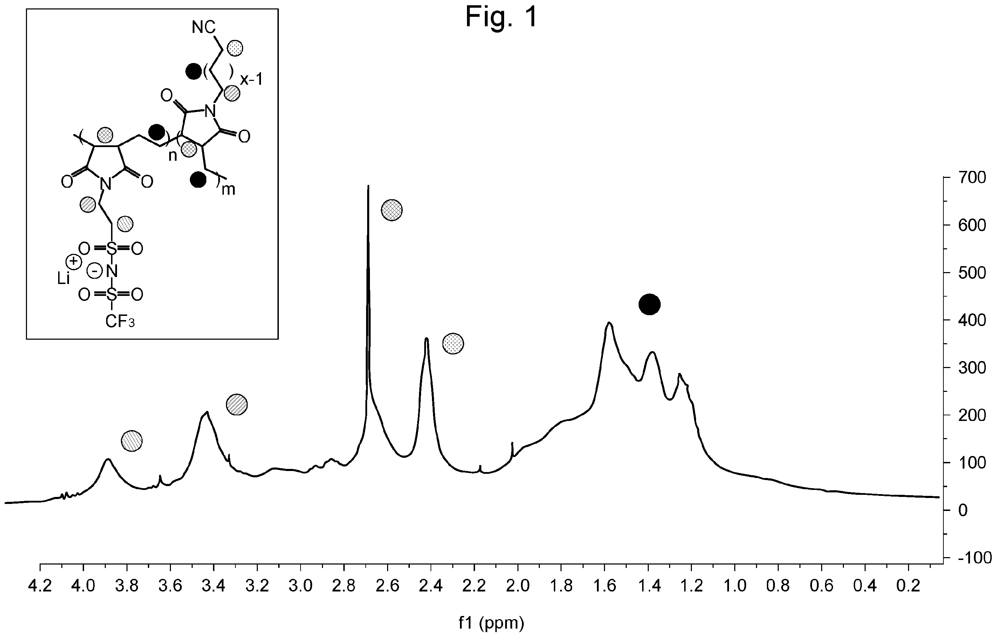

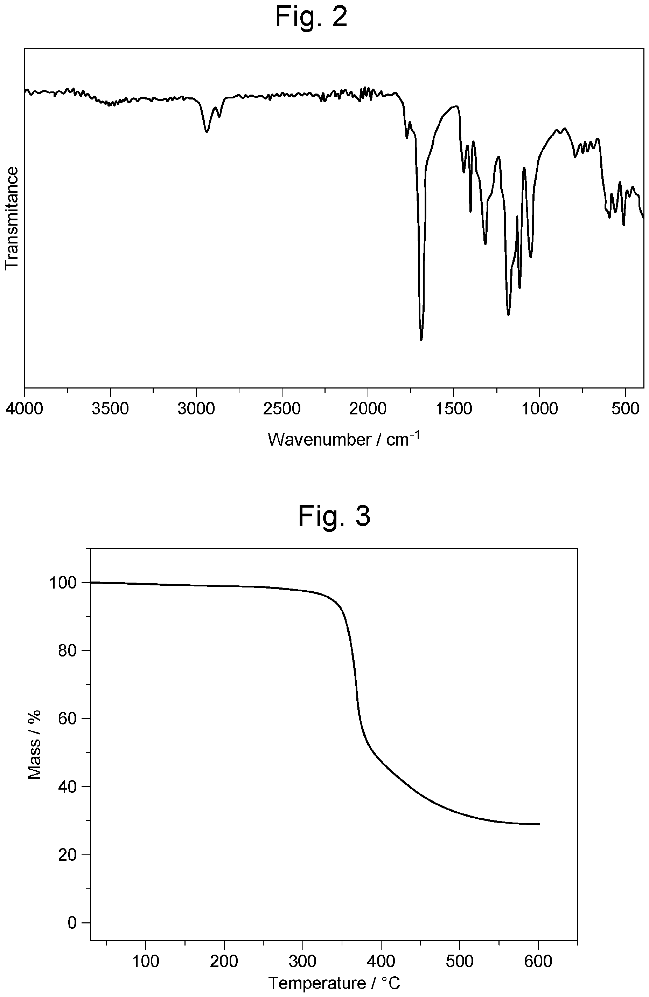

Figs. 1 and 2 show the H nuclear magnetic resonance (H-NMR) spectrum and the Fourier Transform Infrared Spectroscopy (FTIR) spectrum of the obtained ionically conductive polymeric binder, respectively.

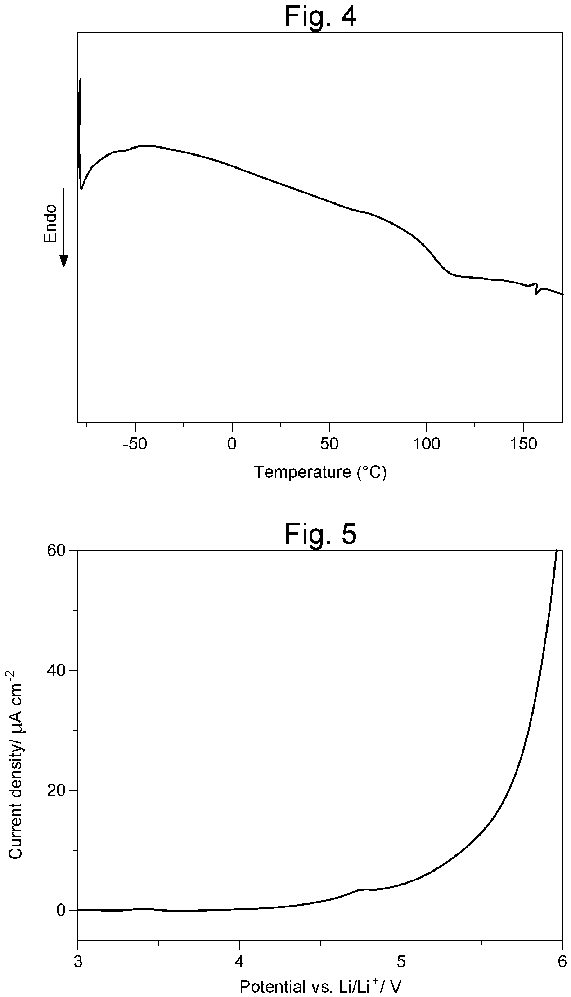

Fig. 3 shows the TGA analysis of the binder, indicating a high thermal resistance surpassing 300 °C. Fig. 4 shows the DSC analysis of the binder, indicating a glass transition temperature of 104 °C. Fig. 5 shows the linear sweep voltammetry (LSV) analysis of the polymeric binder, indicating a high oxidation stability exceeding 4 V.

### Example 2

H₂N-(CH₂)₉-CH₃ as amino-derivative was reacted with a polymer comprising q repeating units 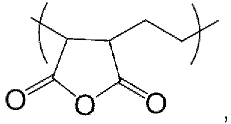 wherein q was between 100 and 4000, for 2 hours at room temperature in the presence of DMF. The obtained intermediate polymer was then reacted with F₃CO₂SN⁻O₂S(CH₂)₂NH₂ Li⁺ for 2 hours at room temperature in the presence of DMF. The obtained reaction product was then first heated to 50 °C for 4 hours in the presence of DMF, and then further heated to 170 °C for 16 hours in the presence of DMF.

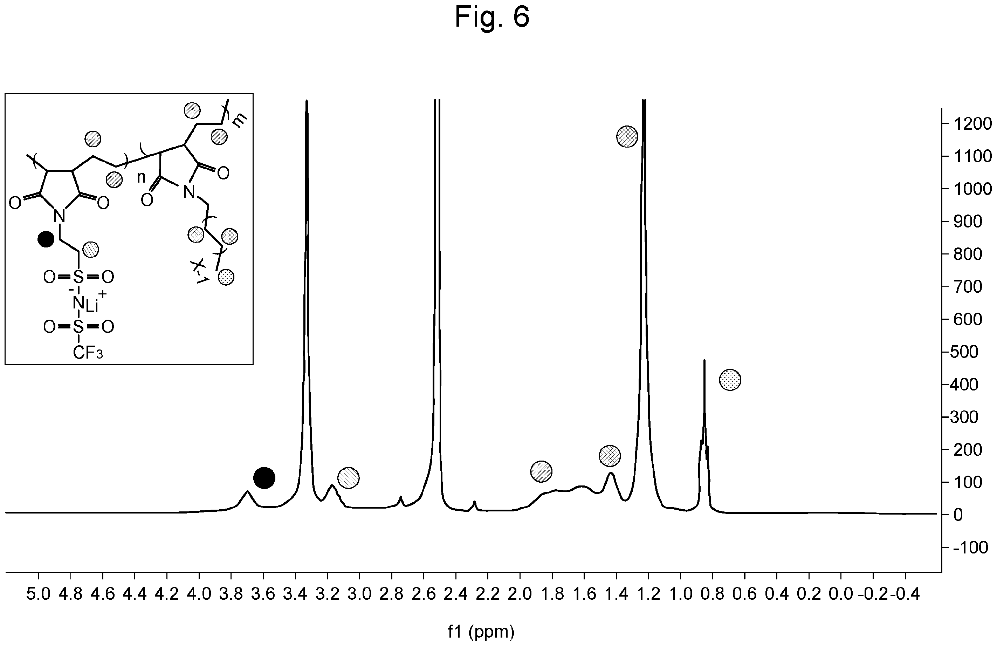

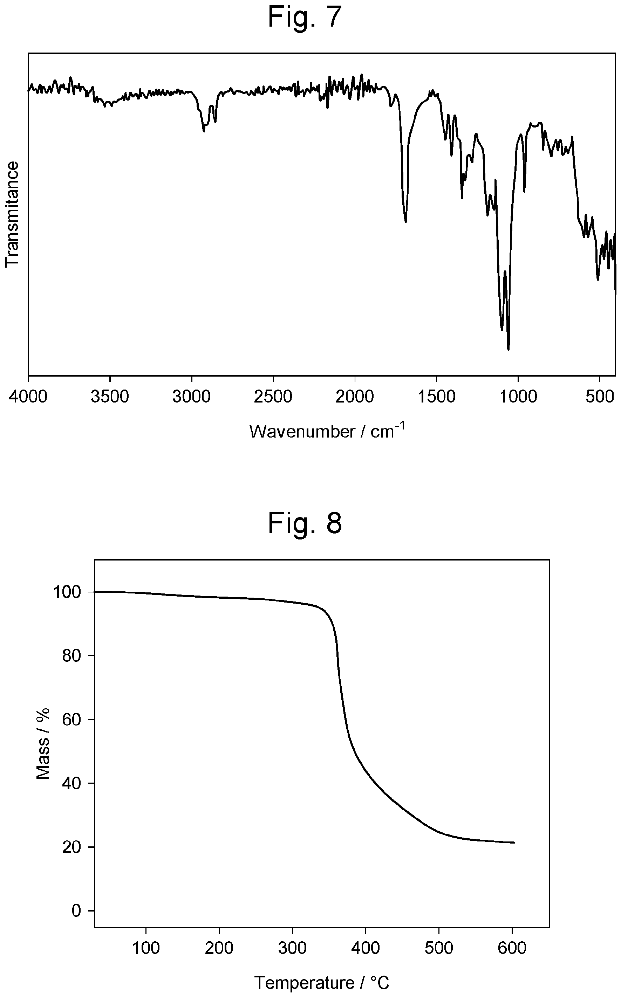

Figs. 6 and 7 show the H-NMR spectrum and the FTIR spectrum of the obtained ionically conductive polymeric binder, respectively.

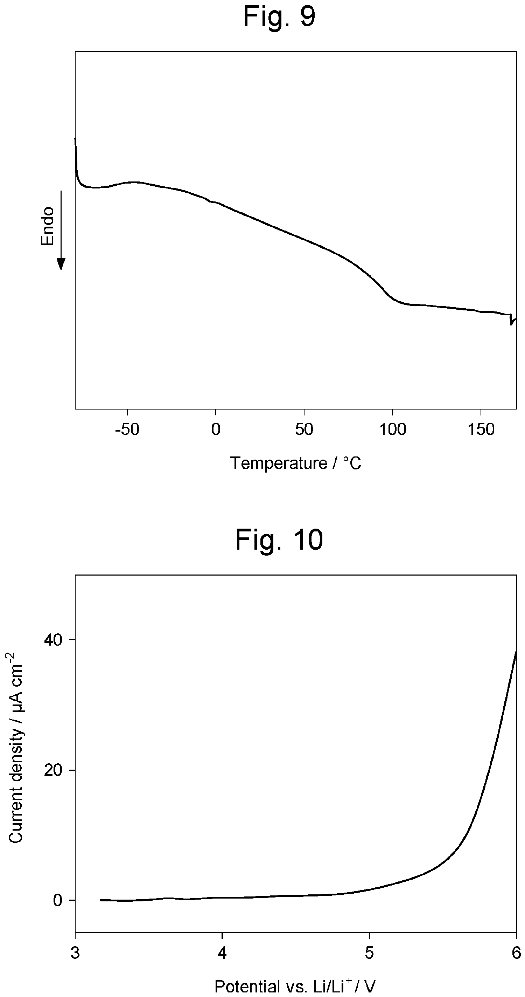

Fig. 8 shows the TGA analysis of the binder, indicating a high thermal resistance surpassing 300 °C. Fig. 9 shows the DSC analysis of the binder, indicating a glass transition temperature of 91 °C. Fig. 10 shows the LSV analysis of the polymeric binder, indicating a high oxidation stability of at least 5 V.

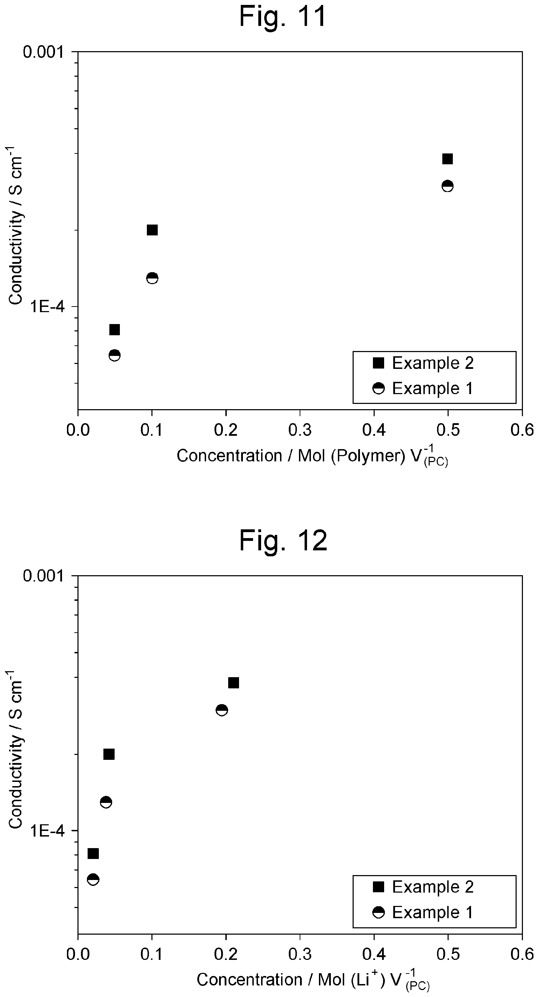

The ionic conductivity of the polymeric binders of Examples 1 and 2 was measured at room temperature, by dispersing the polymeric binders in propylene carbonate. Figs. 11 and 12 show the ionic conductivity in function of the concentration of the polymer and the concentration of the lithium ions, respectively. It is clear that excellent values in the range of 10⁻³ to 5 * 10⁻⁵ S.cm⁻¹ were obtained.

### Example 3

The ionically conductive polymeric binders of Examples 1 and 2 were then used to produce a cathode. A first slurry was prepared with the binder of Example 1, having a solid content of 46-48 wt.%, and a second slurry was prepared with the binder of Example 2, having a solid content of 46-48 wt.%. The solvent used for both slurries was NMP. The solid content of each slurry comprised 90 wt.% of NMC622 as active material, 5 wt.% of carbon black (C-65) as electrically conductive compound, and 5 wt.% of the respective ionically conductive polymeric binder. This led to the slurries having a loading of active material of between 3 and 4 mAh.cm⁻².

The slurries were then tape cased in a Dr. Blade (doctor blade coating technique) on a carbon-coated aluminium foil as cathode current collector, thereby obtaining the cathode. In other words, the cathode consisted of a cathode current collector and a layer consisting of NMC622, C-65 and the ionically conductive polymeric binder.

A reference cathode was prepared as well, by tape casting in a Dr. Blade a slurry having a similar solid content and loading, wherein the solid content comprised 90 wt.% of NMC622 as active material, 5 wt.% of carbon black (C-65) as electrically conductive compound, and 5 wt.% of Polyvinylidene (di)fluoride (PVdF) as binder.

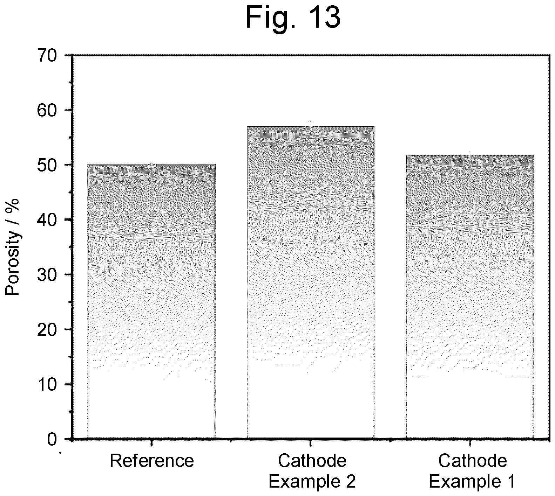

The porosity of all three cathodes, more particularly the porosity of the layers on the current collector, was measured by dividing the density of the cathode by its theoretical density. From Fig. 13 it is clear that the inventive cathodes have a porosity which is higher than the porosity of the reference cathode.

The peeling strength, expressed as adhesion strength and measured according to ISO-8510-1 was also measured. The cathode obtained with the binder of Example 1 had an adhesion strength of 60 N/m, the cathode obtained with the binder of Example 2 has an adhesion strength of 80 N/m, while the reference cathode with PVdF had an adhesion strength of only 41 N/m. In other words, the ionically conductive cathodes of the invention show an adhesion strength which is significantly better than that of the reference cathode.

### Example 4

Three coin cells were assembled with the inventive cathodes of Example 3. The anode was a lithium metal anode, and the electrolyte was a liquid electrolyte comprising 1 M LiPF6 in a solvent mixture comprising ethylene carbonate and dimethylcarbonate in a 1:1 volume ratio.

Two of the coin cells were cycled at 25 °C in a climatic chamber, i.e. an oven allowing to precisely control and maintain the temperature at a preset temperature (here 25 °C) during cyclic testing, at different current rates, i.e., C/20, C/10, C/5, C/2 and 1C for at least 30 cycles without any problems.

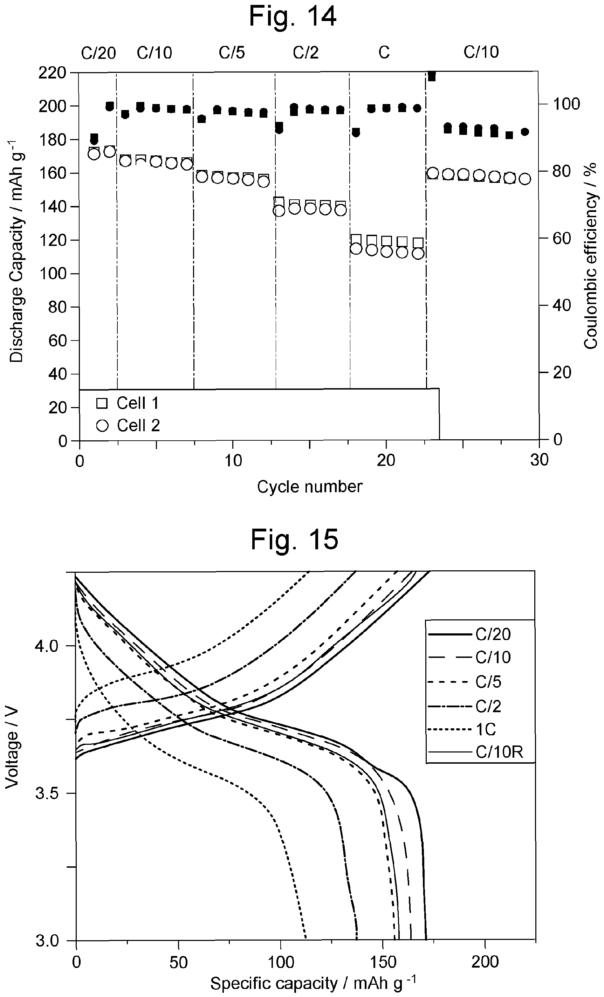

Fig. 14 shows the discharge capacity and the coulombic efficiency of the two coin cells comprising the cathode obtained with the binder of Example 1. It is clear that very high coulombic efficiencies close to 100 % are obtained, as well as an excellent rate-capability with high delivered capacities, despite harsh testing conditions. This indicates that the ionically conductive polymeric binder provides an excellent adhesion and allows the cyclability of the cells. It is further clear that the results for both coin cells are very similar, indicating a very stable and reproducible behaviour of the inventive cathode and thus of the inventive ionically conductive polymeric binder. Fig. 15 shows the voltage in function of the specific capacity. Excellent capacities exceeding 120 mAh/g at the 1C rate were recorded. It was noticed that polarization started at the C/2 rate, but despite this polarization, the delivered discharged capacities remained high.

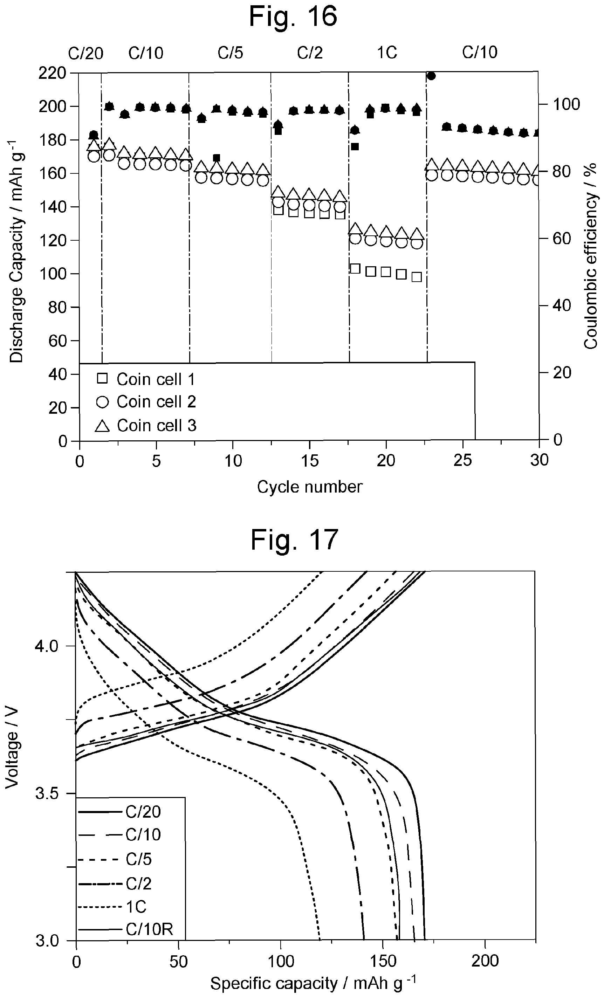

Fig. 16 shows the discharge capacity and the coulombic efficiency of the three coin cells comprising the cathode obtained with the binder of Example 1. Despite harsh testing conditions, it is clear that very high coulombic efficiencies close to 100 % are obtained, as well as an excellent rate-capability with high delivered capacities. This indicates that the ionically conductive polymeric binder provides an excellent adhesion and allows the cyclability of the cells. It is further clear that the results for all coin cells are very similar, indicating a very stable behaviour of the inventive cathode and thus of the inventive ionically conductive polymeric binder. Fig. 17 shows the voltage in function of the specific capacity. Excellent capacities exceeding 120 mAh/g at the 1C rate were recorded. It was noticed that polarization started at the C/2 rate, but despite this polarization, the delivered discharged capacities remained high.

## Claims

1. An ionically conductive polymeric binder for a cathode comprising m repeat units according to formula (I) and n repeat units according to formula (II) 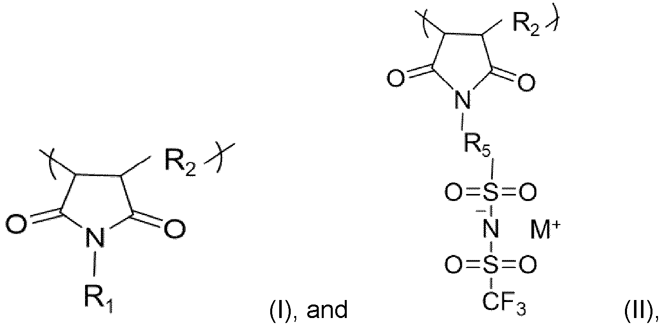 wherein
R₁ is (CH₂)ₓ-R₃, wherein x is between 1 and 20 and R₃ is H or CN;
R₂ and Rs, individually, are C₁-C₁₀ alkyl or C₂-C₁₀ alkenyl;
M is an alkali metal or an alkaline earth metal;
the ratio of m to n (m/n) is between 25:1 and 1:25; and
m + n is q, wherein q is between 50 and 5000.

2. The ionically conductive polymeric binder according to claim 1, wherein x is 6, R₃ is CN, R₂ is (CH₂)₂, and R₅ is (CH₂)₂.

3. The ionically conductive polymeric binder according to claim 1, wherein x is 10, R₃ is H and R₂ is (CH₂)₂, and R₅ is (CH₂)₂.

4. The ionically conductive polymeric binder according to any one of the preceding claims, wherein M is Li, Na or Mg, preferably Li.

5. A cathode comprising the ionically conductive polymeric binder according to any one of the preceding claims

6. The cathode according to claim 5, comprising between 75 % and 95 % by weight of an active material, between 1 % and 15 % by weight of an electrically conductive compound and between 1 % and 15 % by weight of the ionically conductive polymeric binder, based on the total weight of the cathode.

7. The cathode according to claim 6, having a porosity of at least 20 %.

8. The cathode according to any one of claims 5 to 7, wherein the active material comprises one or more of Lithium Nickel Cobalt Manganese Oxide (NMC), preferably NMC811 or NMC622, LiFePO₄ and V₂O₅.

9. The cathode according to any one of claims 5 to 8, comprising between 85 % and 95 % by weight of NMC, between 2 % and 10 % of a carbon black-comprising electrically conductive compound and between 2 % and 10% by weight of the ionically conductive polymeric binder according to any one of the claims 1 to 4, based on the total weight of the cathode.

10. The cathode according to any one of claims 5 to 8, comprising between 75 % and 85 % by weight of LiFePO₄, between 5 % and 15 % of a carbon black-comprising electrically conductive compound and between 5 % and 15 % by weight of the ionically conductive polymeric binder according to any one of the claims 1 to 4, based on the total weight of the cathode.

11. A method for producing an ionically conductive polymeric binder of any one of claims 1 to 4, comprising:
- reacting an amino-derivative according to H₂N-R₁, wherein R₁ is (CH₂)ₓ-R₃, wherein x is between 1 and 20 and R₃ is H or CN, with a polymer comprising q repeat units according to formula (III) 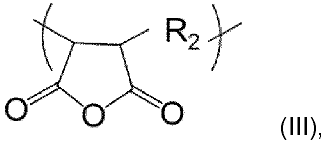 wherein
R₂ is C₁-C₁₀ alkyl or C₂-C₁₀ alkenyl; and
q is between 50 and 5000,
in the presence of dimethylformamide (DMF) at a temperature T₁ between 15 °C and 50 °C, thereby forming a first intermediate polymer,
- reacting the first intermediate polymer with F₃CO₂SNO₂S-R₅-NH₂ M⁺, wherein R₅ is a C₁-C₁₀ alkyl or a C₂-C₁₀ alkenyl and M is an alkali metal or an alkaline earth metal, in the presence of DMF at a temperature T₂ between 15 °C and 50 °C, thereby forming a second intermediate polymer,
- imide ring closing of the second intermediate polymer, thereby forming the ionically conductive polymeric binder, wherein the imide ring closing is performed by heating the second intermediate polymer, in the presence of DMF, to a temperature T₃ between 30 °C and 80 °C, followed by increasing the temperature from T₃ to a temperature T₄ between 100 °C and 250 °C, or is performed in the presence of a catalyst at T₂.

12. The method of claim 11, wherein the first intermediate polymer comprises n repeat units according to formula (III) and m repeat units according to formula (IV) 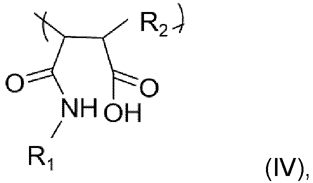 wherein m + n equals q.

13. The method according to claim 12, wherein the second intermediate polymer comprises m repeat units according to formula (IV) and n repeat units according to formula (V) 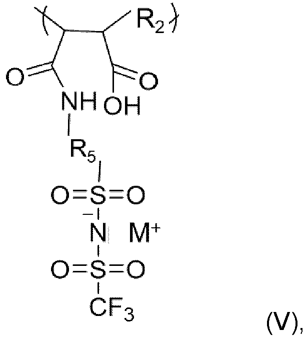 wherein m + n equals q.

14. The method according to any one of claims 11 to 13, wherein M is Li, Na or Mg.

15. The method according to any one of claims 11 to 14, wherein the imide ring is closed in the presence of a catalyst at T₂, wherein the catalyst comprises carbonyldiimidazole.
